# EUROPEAN PATENT APPLICATION

(11) **EP 3 264 273 A1**
(43) Date of publication of application: **03.01.2018**
(21) Application number: 16755758.6
(22) Date of filing: 07.03.2016
(51) Int. Cl.: G06F 11/32

(54) **OPERATION STATUS DISPLAY SYSTEM**

(30) Priority: 24.02.2015 JP 2015034279
(71) Applicant: Nomura Research Institute, Ltd., Chiyoda-ku, Tokyo 1000004 (JP)
(72) Inventor: KIMURA, Tomoaki, Tokyo 100-0005 (JP); ISOGAI, Satoru, Tokyo 100-0005 (JP); OKUMURA, Yusuke, Tokyo 100-0005 (JP); FURUHASHI, Kenichiro, Tokyo 100-0005 (JP); FUDETANI, Mitsuo, Tokyo 100-0005 (JP)
(74) Representative: Hoffmann Eitle
(86) International application number: PCT/JP2016/057003
(87) International publication number: WO 2016/137015

(57) **Abstract**

Accurate understanding of the operating statuses of respective levels at a data center is made possible.

An operating status display system includes: a configuration information storage unit that stores configuration information indicating a relationship between a plurality of systems provided on a plurality of cloud computing systems, a plurality of business applications operating on the plurality of cloud computing system s to realize the systems, a plurality of virtual servers, at least one of the plurality of virtual servers being used for the plurality of business applications, a plurality of physical servers configuring the plurality of virtual servers, and a plurality of facilities used for the plurality of physical servers; an operating information storage unit that stores operating information indicating respective operating statuses of the business applications, the virtual servers, the physical servers, and the facilities; and an operating status display unit that performs switching among system operating statuses indicating operating statuses of at least some of the plurality of systems, cloud computing system operating statuses indicating operating statuses of at least some of the plurality of cloud computing systems, and facility operating statuses indicating operating statuses of at least some of the plurality of facilities according to a user operation and displays the switched operating statuses, based on the configuration information and the operating information.

## Description

### Technical Field

The present invention relates to an operating status display system.

### Background Art

With the widespread use of cloud computing, information systems have been shifted from the on-premises type managed by users themselves to a mode using a data center.

In information systems having such a mode, it is important to understand services operated at a data center or the operating statuses of various appliances. For example, Patent Document 1 discloses a system that manages trouble contents in servers and services affected by the trouble contents in association with each other to display the provided statuses of services based on trouble occurring in the servers.

### Citation List

### Patent Document

Patent Document 1: Patent Publication JP-A-2000-194627

### Summary

### Technical Problem

Meanwhile, it is required to understand operating statuses at a data center not only in services but also in various levels. For example, at a data center, responsible persons for respective levels are required to be capable of understanding the operating statuses of a facility level including a power supply, a rack, or the like, a cloud level including a server or the like configuring a cloud computing system , and a system level including a user system or the like provided on the cloud computing system .

The present invention has been made in view of the above circumstances and has an object of accurately understanding the operating statuses of respective levels at a data center.

### Solution to Problem

An operating status display system according to an aspect of the present invention includes: a configuration information storage unit that stores configuration information indicating a relationship between a plurality of systems provided on a plurality of cloud computing system s, a plurality of business applications operating on the plurality of cloud computing system s to realize the systems, a plurality of virtual servers, at least one of the plurality of virtual servers being used for the plurality of business applications, a plurality of physical servers configuring the plurality of virtual servers, and a plurality of facilities used for the plurality of physical servers; an operating information storage unit that stores operating information indicating respective operating statuses of the business applications, the virtual servers, the physical servers, and the facilities; and an operating status display unit that performs switching among system operating statuses indicating operating statuses of at least some of the plurality of systems, cloud computing system operating statuses indicating operating statuses of at least some of the plurality of cloud computing system s, and facility operating statuses indicating operating statuses of at least some of the plurality of facilities according to a user operation and displays the switched operating statuses, based on the configuration information and the operating information.

Note that a "unit" in the present invention does not simply represent physical means but the present invention includes a case in which the function of the "unit" is realized by software. Further, the function of one "unit" or apparatus may be realized by two or more physical means or apparatuses, or the functions of two or more "units" or apparatuses may be realized by one physical means or apparatus.

### Advantageous Effects of Invention

According to the present invention, it becomes possible to accurately understand the operating statuses of respective levels at a data center.

### Brief Description of Drawings

Fig. 1 is a schematic diagram showing the configuration of a monitoring system at a data center.
Fig. 2 is a diagram showing an example of function blocks in an operating status display system.
Fig. 3 is a diagram showing an example of configuration information.
Fig. 4 is a diagram showing an example of a screen to select any of levels of which operating statuses are to be displayed.
Fig. 5 is a diagram showing an example of the screen of system operating statuses.
Fig. 6 is a diagram showing an example of the screen of the operating statuses of the logic configurations of systems.
Fig. 7 is a diagram showing an example of the screen of the list of the system operating statuses.
Fig. 8 is a diagram showing an example of the screen of cloud computing system operating statuses.
Fig. 9 is a diagram showing an example of the screen of the operating statuses of the logic configurations of cloud computing system s.
Fig. 10 is a diagram showing an example of the screen of the list of the cloud computing system operating statuses.
Fig. 11 is a diagram showing an example of the screen of facility operating statuses.
Fig. 12 is a diagram showing an example of the screen of the details of the facility operating statuses.
Fig. 13 is a diagram showing an example of the screen of the list of the facility operating statuses.
Fig. 14 is a schematic diagram showing the configuration of a monitoring system in a second embodiment.
Fig. 15 is a diagram showing an example of configuration information in the second embodiment.
Fig. 16 is a diagram showing an example of a screen on which the operating statuses of a monitoring target in the second embodiment are displayed.
Fig. 17 is a diagram showing an example of the screen of network operating statuses.
Fig. 18 is a diagram showing an example of the screen of operation base operating statuses.
Fig. 19 is a diagram showing an example of the screen of the list of cloud computing system operating statuses in the second embodiment.
Fig. 20 is a diagram showing an example of the screen of the list of system operating statuses in the second embodiment.
Fig. 21 is a diagram showing an example of the screen of the list of facility operating statuses in the second embodiment.

### Description of Embodiments

### [First Embodiment]

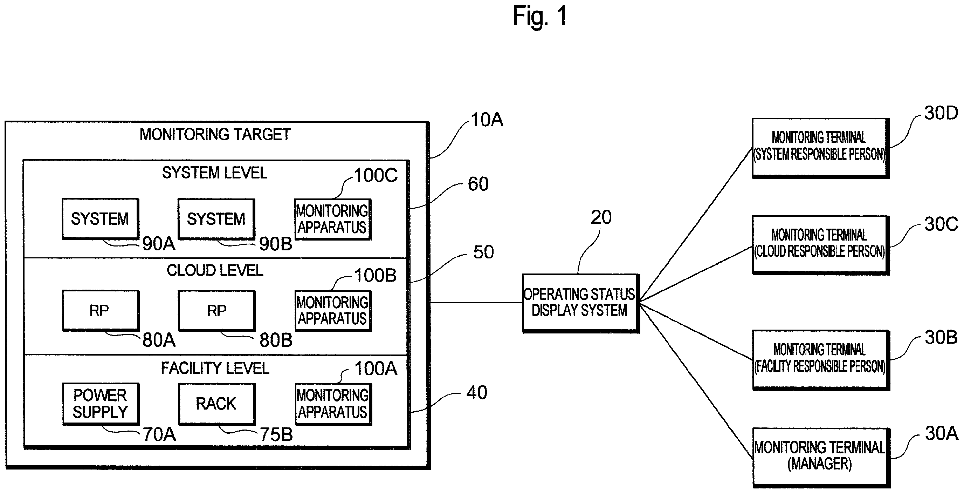

First, a first embodiment of the present invention will be described. Fig. 1 is a schematic diagram showing the configuration of a monitoring system in the first embodiment. The monitoring system is a system that monitors operating statuses in a data center. The monitoring system includes a monitoring target 10A, an operating status display system 20, and monitoring terminals 30 (30A to 30D).

The monitoring target 10A includes systems that operate in the data center, facilities in the data center, or the like. Specifically, the monitoring target 10A includes a facility level 40, a cloud level 50, and a system level 60.

The facility level 40 includes a plurality of facilities in the data center. For example, the facility level 40 includes a power supply 70 and a rack 75. Since the facilities in the facility level 40 are environments provided between the building and the information appliances of the data center, the facilities are called middle facilities (MFs). The facility level 40 also includes a monitoring apparatus 100A for monitoring the operating statuses of the facilities in the facility level 40. The monitoring apparatus 100A transmits operating information indicating the operating statuses of the respective constituents to the operating status display system 20 at, for example, a prescribed interval based on signals from sensors or the like provided in the respective constituents.

The cloud level 50 includes the configurations of a plurality of cloud computing systems provided to users. For example, the cloud level 50 includes resource pools (RP) 80 (80A and 80B). The resource pools 80 are the grouped resources of virtual servers or the like provided on the cloud computing system s. The virtual servers configuring the resource pools 80 are realized using, for example, virtualization software such as VMware (registered trademark) or the like on physical servers. The cloud level 50 also includes a monitoring apparatus 100B for monitoring the operating statuses of the constituents in the cloud level 50. The monitoring apparatus 100B transmits operating information indicating the operating statuses of the respective constituents to the operating status display system 20 at, for example, a prescribed interval based on log information or the like output from the respective constituents.

The system level 60 includes a plurality of systems 90 (90A and 90B) provided on the cloud computing system s. The respective systems 90 have business applications that operate on the cloud computing system s. The respective business applications are performed using the virtual servers on the cloud computing system s. The system level 60 also includes a monitoring apparatus 100C for monitoring the operating statues of the constituents in the system level 60. The monitoring apparatus 100C transmits operating information indicating the operating statuses of the respective constituents to the operating status display system 20 at, for example, a prescribed interval based on log information or the like output from the respective constituents.

Note that the monitoring apparatuses 100 are provided for the respective levels in the configuration shown in Fig. 1, but a monitoring apparatus 100 may be shared between the plurality of levels.

The operating status display system 20 can display the operating statuses of the constituents that configure the monitoring target 10A on the monitoring terminals 30 (30A to 30D) based on the operating information from the monitoring target 10A. For example, the operating status display system 20 can transmit data for displaying the operating statuses on the web browsers of the monitoring terminals 30 to the monitoring terminals 30 according to user operations at the monitoring terminals 30. The details of the operating status display system 20 will be described later.

The monitoring terminals 30 (30A to 30D) are terminals for confirming the operating statuses of the constituents that configure the monitoring target 10A. The monitoring terminals 30 are realized using, for example, personal computers, tablet terminals, or the like. The monitoring terminal 30A is, for example, a terminal for causing the manager of the data center, the responsible person of a system development section, or the like to confirm the operating statuses. With the monitoring terminal 30A, the confirmation of the operating statuses of all the levels of the monitoring target 10A is allowed. The monitoring terminal 30B is, for example, a terminal for causing the responsible person of the facility level 40 to confirm the operating statuses of the facility level 40. The monitoring terminal 30C is, for example, a terminal for causing the responsible person of the cloud level 50 to confirm the operating statuses of the cloud level 50. The monitoring terminal 30D is, for example, a terminal for causing the responsible person of system development to confirm the operating statuses of respective responsible systems.

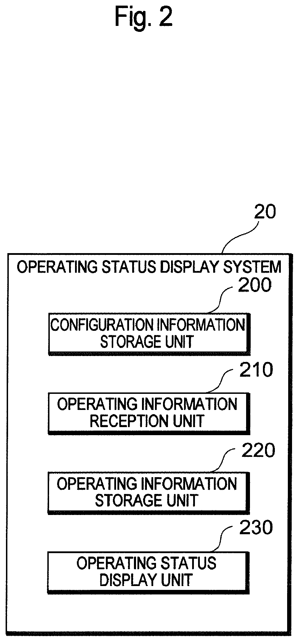

Fig. 2 is a diagram showing an example of function blocks in the operating status display system 20. The operating status display system 20 is realized using, for example, an information processing apparatus including a processor and a storage device. As shown in Fig. 2, the operating status display system 20 includes a configuration information storage unit 200, an operating information reception unit 210, an operating information storage unit 220, and an operating status display unit 230. The configuration information storage unit 200 and the operating information storage unit 220 are realized using, for example, a storage device. The operating information reception unit 210 and the operating status display unit 230 are realized, for example, when a processor performs a program stored in the storage device. Note that the program for realizing the operating status display system 20 may be installed from a storage medium such as a CD-ROM or via a network.

The configuration information storage unit 200 stores configuration information that indicates the relationship between a plurality of systems provided on a plurality of cloud computing system s, a plurality of business applications that operates on the plurality of cloud computing system s to realize the systems, a plurality of virtual servers used by the plurality of business applications, a plurality of physical servers that configures the plurality of virtual servers, and a plurality of facilities used by the plurality of physical servers.

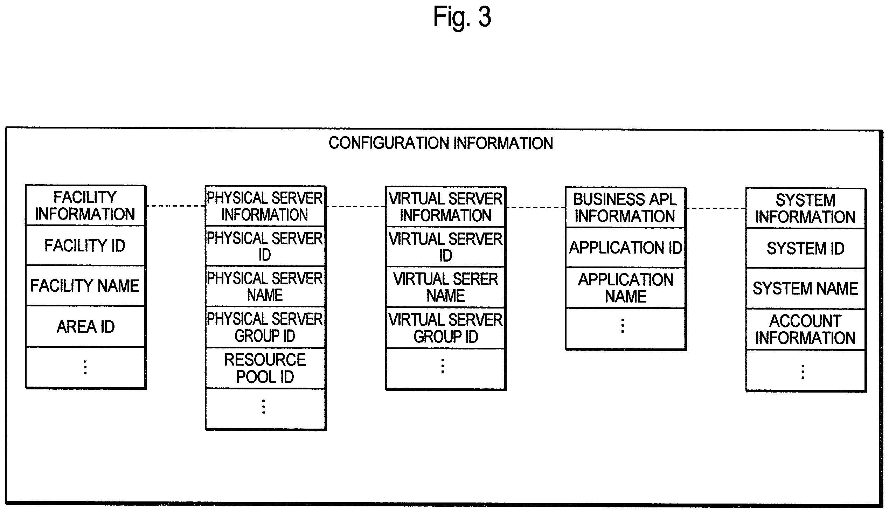

Fig. 3 is a diagram showing an example of the configuration information. Configuration information shown in Fig. 3 includes facility information, physical server information, virtual server information, business application (APL) information, and system information.

The facility information is information on the facilities in the facility level 40. The facility information includes, for example, facility IDs (identifiers), facility names, area IDs indicating areas in which the facilities are arranged, or the like.

The physical server information is information on the physical servers for realizing the cloud computing systems provided by the cloud level 50. The physical server information includes, for example, physical server IDs, physical server names, physical server group IDs indicating the groups of the physical servers, resource pool IDs indicating resource pools to which the physical servers belong, or the like. The groups of the physical servers may be, for example, the groups of blade servers stored in the same enclosure or can be any other groups.

The virtual server information is information on the virtual servers for realizing the cloud computing systems provided by the cloud level 50. The virtual server information includes, for example, virtual server IDs, virtual server names, virtual server group IDs indicating the groups of the virtual servers, or the like. The groups of the virtual servers may be groups having, for example, a principal and sub duplexed configuration, an N+1 configuration, or the like for enhancing fault tolerance, or can be any other groups.

The business application information is information on the business applications performed by the systems provided by the system level 60. The business application information includes, for example, application IDs, application names, business logic (BL) IDs, business logic group IDs, or the like. The business logic IDs are information for identifying business logic configured by the plurality of business applications. The business logic group IDs are information for identifying the groups of the business logic. The groups of the business logic may be groups having, for example, a principal and sub duplexed configuration, an N+1 configuration, or the like for enhancing fault tolerance, or can be any other groups.

The system information is information on the systems provided by the system level 60. The system information includes, for example, system IDs, system names, account information, or the like. The account information is information for identifying the responsible persons of the systems and includes, for example, user IDs, organization IDs indicating organizations to which the users belong, or the like.

In the configuration information, the facility information, the physical server information, the virtual server information, the business application information, and the system information are associated with each other based on the relationship between the constituents. Note that the information may be associated with each other on a one-to-one basis, a one-to-multiple basis, or a multiple-to-multiple basis. For example, system information on a system is associated with business application information on a plurality of business applications performed by the system. Further, for example, business application information on a business application is associated with virtual server information on one or a plurality of virtual servers in which the business application is performed. The other information is also associated with each other similarly.

Referring back to Fig. 2, the operating information reception unit 210 receives the operating information indicating the operating statuses of the respective constituents of the monitoring target 10A from the monitoring apparatuses 100 and stores the same in the operating information storage unit 220. The operating information includes, for example, the IDs of the constituents (such as facility IDs and physical server IDs), data indicating a status such as a normal or abnormal status, date and time, or the like.

The operating status display unit 230 can display the operating statuses of the constituents of the monitoring target 10A on the monitoring terminals 30 based on the configuration information stored in the configuration information storage unit 200 and the operating information stored in the operating information storage unit 220. For example, based on the configuration information and the operating information, the operating status display unit 230 can perform switching among system operating statuses indicating the operating statuses of at least some of the plurality of systems, cloud computing system operating statuses indicating the operating statuses of at least some of the plurality of cloud computing systems, and facility operating statuses indicating the operating statuses of at least some of the plurality of facilities according to user operations and display the switched operating statuses. Hereinafter, a specific example of the display of the operating statuses by the operating status display unit 230 will be described.

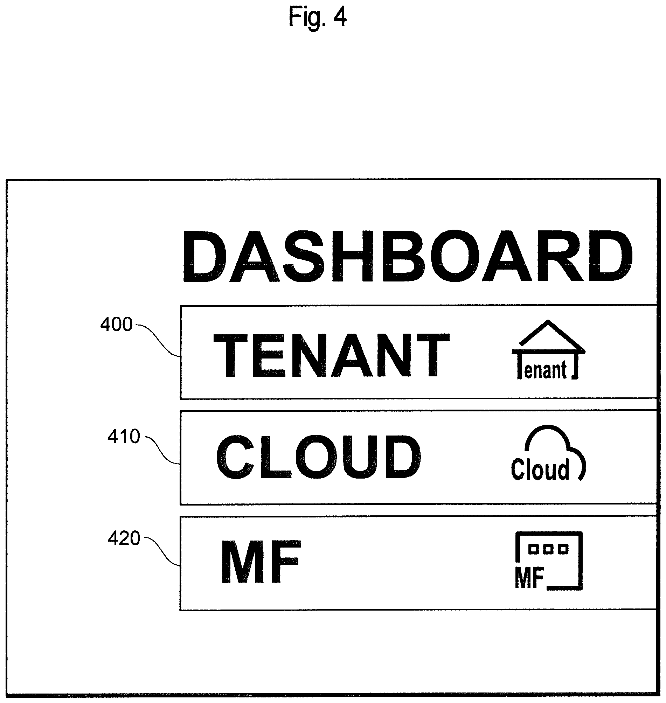

Fig. 4 is a diagram showing an example of a screen (top screen) to select any of the levels of which the operating statuses are to be displayed. Note that the operating status display system 20 is used to display the operating statuses of the monitoring target 10A so as to be easily understood based on the operating statuses of the various constituents, and its interface is called a dash board (DASHBOARD). A screen shown in Fig. 4 is displayed, for example, when the manager accesses the operating status display system 20 from the monitoring terminal 30A.

The screen shown in Fig. 4 includes a tenant selection region (TENANT) 400, a cloud selection region (CLOUD) 410, and a facility selection region (MF) 420. When the tenant selection region 400 is selected, the operating status display unit 230 displays the operating statuses (system operating statuses) of the system level. Note that since the respective systems provided on the cloud computing systems borrow the resources of the cloud computing systems, the respective systems are called "tenants." When the cloud selection region 410 is selected, the operating status display unit 230 displays the operating statuses (cloud computing system operating statuses) of the cloud level. When the facility selection region 420 is selected, the operating status display unit 230 displays the operating statuses (facility operating statuses) of the facility level.

Note that when the other monitoring terminals 30B to 30D access the operating status display system 20, corresponding screens that display the operating statuses of the respective levels are displayed. However, when the other monitoring terminals 30B to 30D access the operating status display system 20, the screen shown in Fig. 4 may also be displayed.

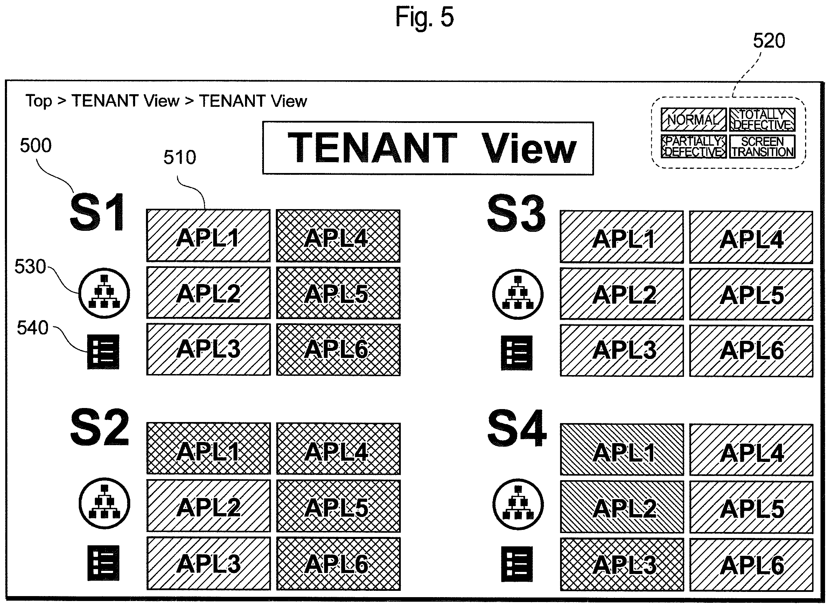

Fig. 5 is a diagram showing an example of the screen of the system operating statuses. A screen shown in Fig. 5 is displayed, for example, when the tenant selection region 400 is selected on the top screen shown in Fig. 4 or when the system responsible person accesses the operating status display system 20 from the monitoring terminal 30D. Note that the operating status display unit 230 can determine the systems of which the operating statuses are to be output based on the attributes of users who access the operating status display system 20. For example, the operating status display unit 230 can determine the systems of which the operating statuses are to be output based on the account information included in the system information of the configuration information.

The screen shown in Fig. 5 includes system display regions 500, operating status display regions 510, a reference information display region 520, logic configuration selection regions 530, and list selection regions 540.

The system display regions 500 display information (for example, system names, system abbreviated names, or the like) for identifying systems. On the screen shown in Fig. 5, the four systems of "S1," "S2," "S3," and "S4" are displayed.

The operating status display regions 510 display icons indicating the operating statuses of business applications in the systems. In the example shown in Fig. 5, icons indicating the operating statuses of business applications such as "APL1" and "APL2" are displayed about the system "S1." The operating status display unit 230 changes the display modes of the respective icons according to the operating statuses of the respective business applications. The reference information display region 520 displays the descriptions of the display modes of the icons. When the operating statuses of the business applications are "normal" statuses, the icons are displayed in, for example, green. Further, when the operating statuses of the business applications are "partially defective" statuses (for example, in the case of a fallback or the like), the icons are displayed in, for example, yellow. Further, when the operating statuses of the business applications are "totally defective" statuses (for example, in the case of the complete stop of the performance of the business applications or the like), the icons are displayed in, for example, red. Note that the display modes of the icons shown in Fig. 5 are taken as an example, and any other display modes by which to allow the identification of the operating statuses can be employed. Further, the classification of the operating statuses is not limited to the "normal," "partially defective," and "totally defective" statuses. For example, the classification of the operating statuses may include a status indicating that operating information has not been acquired. When the operating information has not been acquired, the icons may be displayed in, for example, white.

When the logic configuration selection regions 530 are selected, the operating status display unit 230 displays a screen to indicate the operating statuses of the logic configurations of the systems. When the list selection regions 540 are selected, the operating status display unit 230 displays a screen to indicate the list of the operating statuses of the systems.

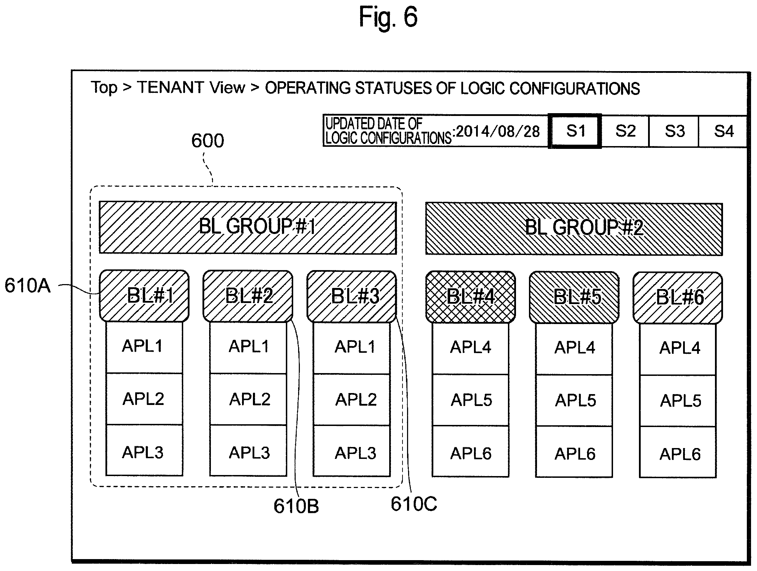

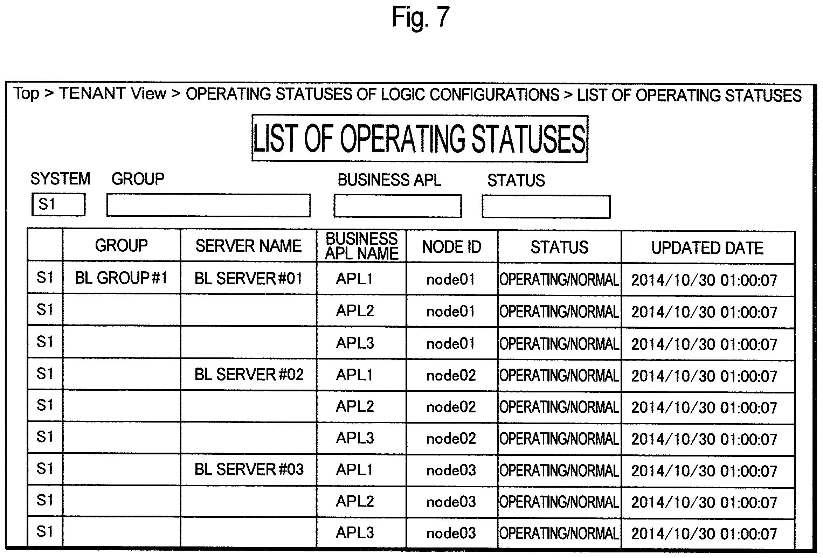

Fig. 6 is a diagram showing an example of the screen of the operating statuses of the logic configurations of the systems. A screen shown in Fig. 6 is displayed, for example, when the logic configuration selection regions 530 are selected on the screen shown in Fig. 5. Further, it is possible to transition from a screen shown in Fig. 7 that will be described later to the screen shown in Fig. 6. The screen shown in Fig. 6 includes an operating status display region 600 of a business logic group (virtual server group) and operating status display regions 610 (610A to 610C) of respective business logic (virtual servers) included in the business logic group. In the example shown in Fig. 6, a business logic group #1 includes three business logic #1, #2, and #3. The operating status display unit 230 changes the display modes of the operating status display regions 610A to 610C of the business logic according to the operating statuses of the business applications of the respective business logic. Further, the operating status display unit 230 changes the display modes of the operating status display region 600 of the business logic group according to the operating statuses of the respective business logic. Note that the display modes of the operating statuses are, for example, the same as those of Fig. 5.

Fig. 7 is a diagram showing an example of the screen of the list of the system operating statuses. A screen shown in Fig. 7 is displayed, for example, when the list selection regions 540 are selected on the screen shown in Fig. 5. Further, it is possible to transition from the screen shown in Fig. 6 to the screen shown in Fig. 7. On the screen shown in Fig. 7, a "system," a "group," a "service," and a "status" can be selected. The operating status display unit 230 displays the list of the operating statuses based on a selection result. Note that a group, a server, a service, and a node on the screen shown in Fig. 7 correspond to a virtual server group name, a virtual server name, an application name, and a virtual server ID, respectively.

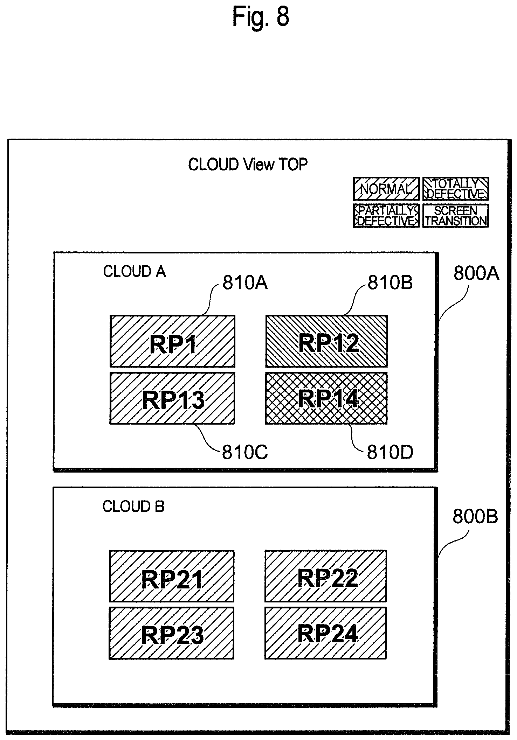

Fig. 8 is a diagram showing an example of the screen of the cloud computing system operating statuses. A screen shown in Fig. 8 is displayed, for example, when the cloud selection region 410 is selected on the top screen shown in Fig. 4 or when the cloud computing system responsible person accesses the operating status display system 20 from the monitoring terminal 30C. The screen shown in Fig. 8 includes operating status display regions 800 (800A and 800B) of the cloud computing systems. Further, the operating status display regions 800 of the respective cloud computing systems include operating status display regions 810 of resource pools that configure the cloud computing systems. For example, an operating status display region 800A of a cloud computing system A (CLOUD A) includes operating status display regions 810A to 810D of four resource pools. Note that the display modes of the operating statuses are, for example, the same as those of Fig. 5.

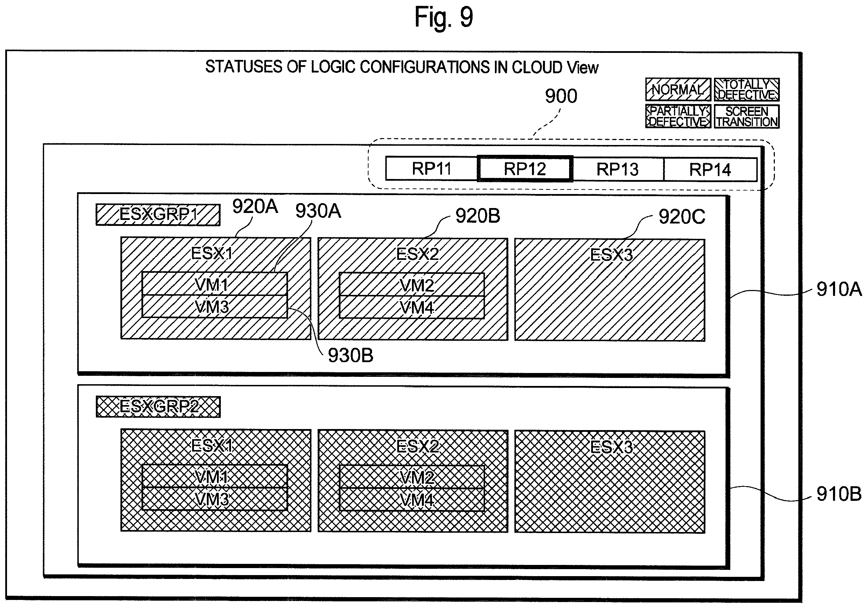

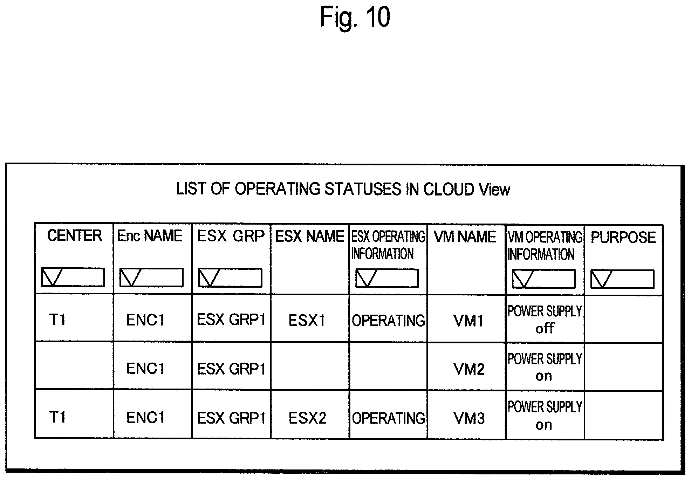

Fig. 9 is a diagram showing an example of the screen of the operating statuses of the logic configurations of the cloud computing systems. A screen shown in Fig. 9 is displayed, for example, when the operating status display regions 810 of the resource pools are selected on the screen shown in Fig. 8. Further, it is possible to transition from a screen shown in Fig. 10 that will be described later to the screen shown in Fig. 9. The screen shown in Fig. 9 is an example in which the operating statuses of a resource pool RP12 are displayed. The screen shown in Fig. 9 includes a resource pool selection region 900, operating status display regions 910 (910A and 910B) of physical server groups, operating status display regions 920 (920A to 920C) of physical servers, and operating status display regions 930 (930A and 930B) of virtual servers. On the screen shown in Fig. 9, it is possible to switch the resource pools of which the operating statuses are to be displayed, by selecting the resource pools in the resource pool selection region 900. Note that the display modes of the operating statuses are, for example, the same as that of Fig. 5.

Fig. 10 is a diagram showing an example of the screen of the list of the cloud computing system operating statuses. A screen shown in Fig. 10 is displayed, for example, when the operating status display regions 910 of the physical server groups are selected on the screen shown in Fig. 9. On the screen shown in Fig. 9, a "center," an "Enc name," an "ESX GRP," an "ESX operating information," a "VM name," and "VM operating information" can be selected. The operating status display unit 230 displays the list of the operating statuses based on a selection result. Note that a center, an Enc, an ESX, and a VM on the screen shown in Fig. 10 correspond to a data center, an enclosure, a physical server, and a virtual server, respectively.

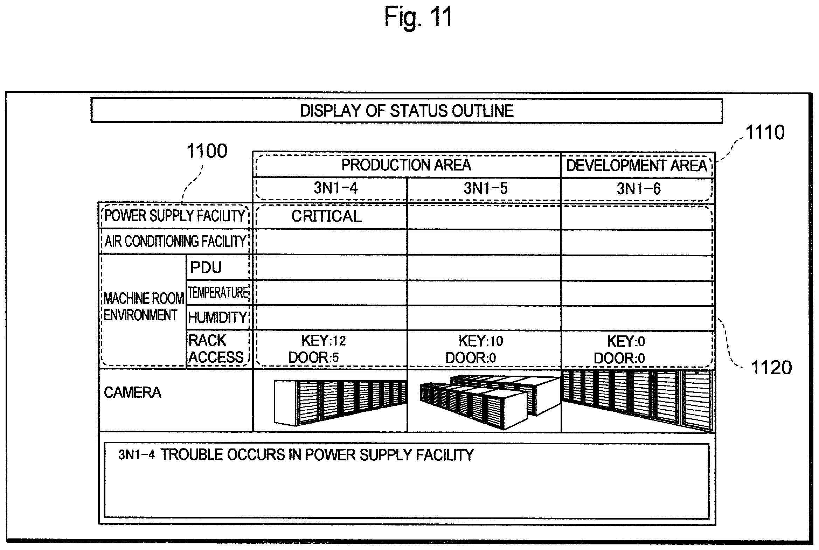

Fig. 11 is a diagram showing an example of the screen of the outline of the facility operating statuses. A screen shown in Fig. 11 is displayed, for example, when the facility selection region 420 is selected on the top screen shown in Fig. 4 or when the facility responsible person accesses the operating status display system 20 from the monitoring terminal 30B. The screen shown in Fig. 11 includes a facility display region 1100, an area display region 1110, and an operating status display region 1120. The facility display region 1100 displays, for example, information indicating facilities in the data center such as a power supply facility and an air conditioning facility. The area display region 1110 displays information indicating areas in which the facilities are arranged. The operating status display region 1120 displays information indicating the operating statuses of the facilities. In the example shown in Fig. 11, the operating status of the power supply facility arranged in an area 3N1-4 is displayed as a "CRITICAL" status. That is, the information indicates the occurrence of trouble in the power supply facility. Note that the same display modes as those of Fig. 5 may be employed for the operating statuses of the respective facilities.

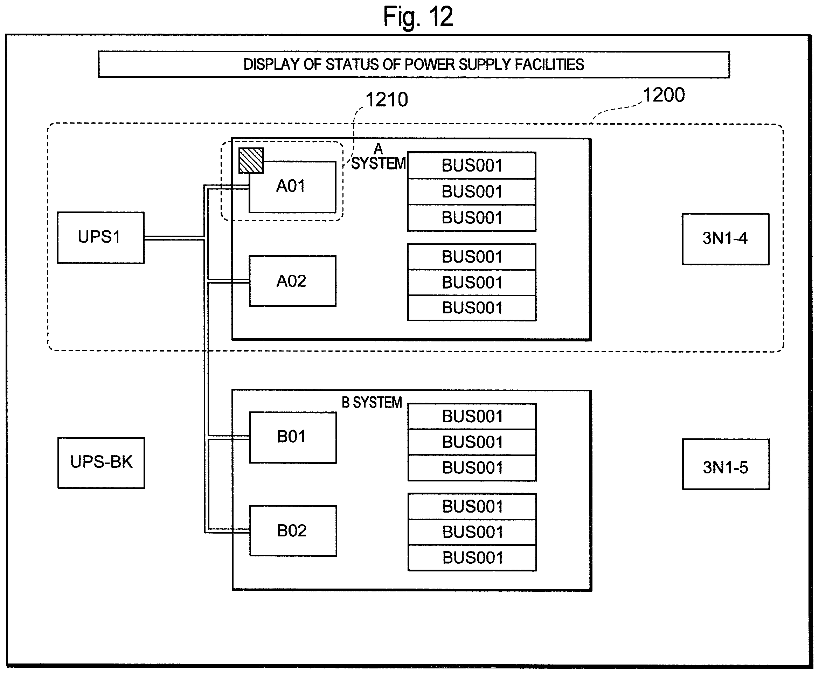

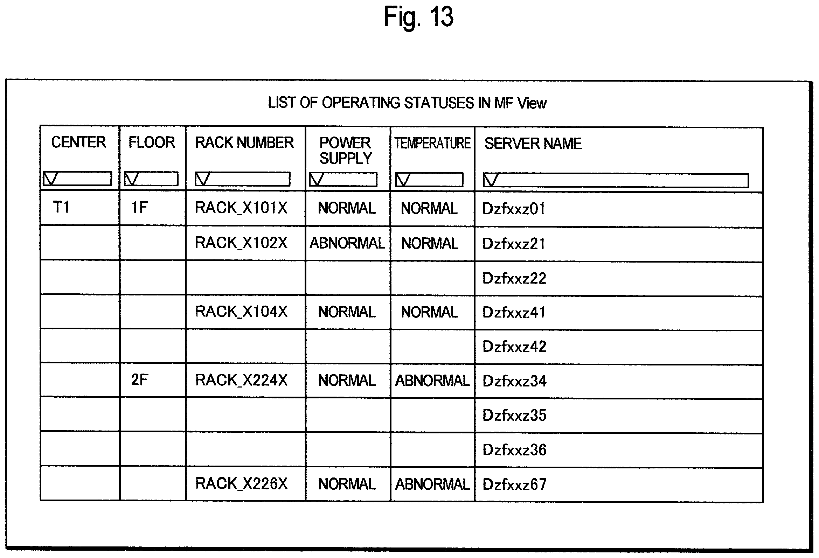

Fig. 12 is a diagram showing an example of the screen of the details of the facility operating statuses. A screen shown in Fig. 12 is displayed, for example, when the operating status display region 1120 of the facilities is selected on the screen shown in Fig. 11. Further, it is possible to transition from a screen shown in Fig. 13 that will be described later to the screen shown in Fig. 12. The screen shown in Fig. 12 is an example in which the operating statuses of the facilities in the area 3N1-4 and an area 3N1-5 are displayed. Specifically, an operating status display region 1200 displays the operating statuses of the facilities provided in the area 3N1-4. Further, an operating status display region 1210 displays a mark indicating the occurrence of trouble in a power supply facility (A01) in the area. Note that the same display modes as those of Fig. 5 may be employed for the operating statuses of the respective facilities.

Fig. 13 is a diagram showing an example of the screen of the list of the facility operating statuses. A screen shown in Fig. 13 is displayed, for example, when the operating status display region 1200 is selected on the screen shown in Fig. 12. On the screen shown in Fig. 13, a "center," a "floor," a "rack number," a "power supply," a "temperature," and a "server name" can be selected. The operating status display unit 230 displays the list of the operating statuses based on a selection result. On the screen shown in Fig. 13, the "power supply" and the "temperature" indicate the power supply and the temperature of a rack indicated by the rack number, respectively.

The screens displayed by the operating status display unit 230 are exemplified above with reference to Figs. 4 to 13. According to the embodiment, system operating statuses (for example, Figs. 5 to 7) indicating the operating statuses of at least some of a plurality of systems, cloud computing system operating statuses (for example, Figs. 8 to 10) indicating the operating statuses of at least some of a plurality of cloud computing systems, and facility operating statuses (for example, Figs. 11 to 13) indicating the operating statuses of at least some of a plurality of facilities can be switched and displayed according to user operations based on configuration information and operating information. Thus, it becomes possible to accurately understand the operating statuses of respective levels at a data center. Note that it is possible for a system responsible person, a cloud computing system responsible person, and a facility responsible person to refer to screens indicating the operating statuses of levels different from their levels for which the persons are responsible. In this case, the operating status display unit 230 can perform control such that only operating statuses relating to cloud computing systems and facilities associated with a system for which the system responsible person is responsible based on account information on the system responsible person.

Further, according to the embodiment, the operating statuses of business applications can be understood by icons having display modes corresponding to the operating statuses as shown in, for example, Fig. 5. Thus, it becomes possible to accurately understand the operating statuses.

Further, according to the embodiment, the display modes of the operating statuses of business applications can be changed based on the operating statuses of at least two virtual servers as shown in, for example, Fig. 5 when it is possible to perform the business applications with the at least two virtual servers among a plurality of virtual servers. More specifically, for example, the display modes can be changed in such a manner that the operating statuses of the business applications are displayed in "green" when the statuses of all of the at least two virtual servers are normal statuses, displayed in "yellow" when the statuses of the at least two virtual servers are partially defective statuses, and displayed in "red" when the statuses of all of the at least two virtual servers are defective statuses. Thus, it becomes possible to accurately understand the operating statuses.

Further, according to the embodiment, the operating statuses of business applications (for example, Fig. 5) and the operating statuses of virtual servers (Fig. 6 or 7) indicating the operating statuses of at least some of the plurality of virtual servers used for the business applications can be switched and displayed according to user operations. Thus, it becomes possible to accurately understand the operating statuses.

Further, according to the embodiment, the operating statuses of respective servers in a group and the operating statuses of the group can be displayed based on the operating statuses of the virtual servers in the group as shown in, for example, Fig. 7 when at least some of the plurality of virtual servers configure the group. Thus, it becomes possible to accurately understand the operating statuses.

### [Second Embodiment]

Next, a second embodiment of the present invention will be described. The second embodiment will omit the descriptions of matters the same as those of the first embodiment and describe only points different from those of the first embodiment. Particularly, the same functions and effects of the same configurations will not be mentioned one by one for each embodiment.

In the second embodiment, an operating status display system 20 can provide a screen on which the operating statuses of a system having a complicated configuration are easily understandable, the system being configured such that data centers and operation bases (for example, bases at which the operations of business applications are managed or the like) are on a multiple-to-multiple basis.

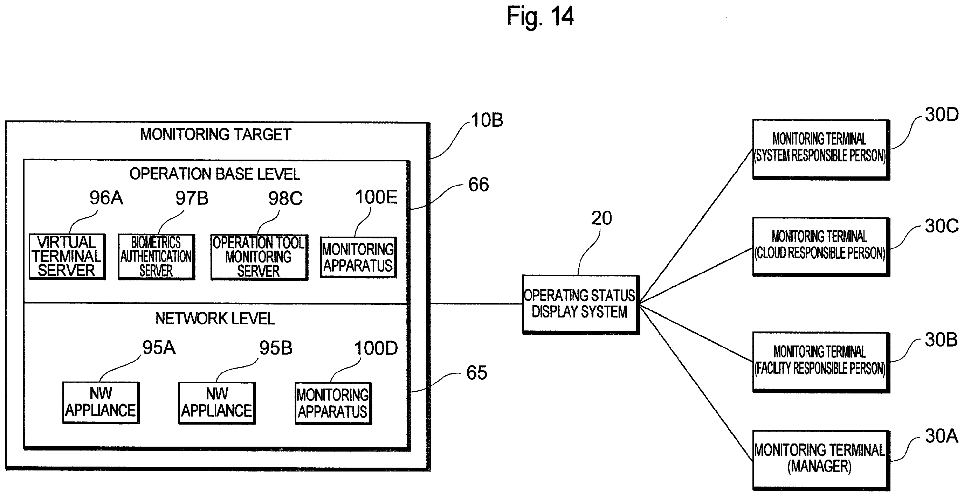

Fig. 14 is a schematic diagram showing the configuration of a monitoring system in the second embodiment. In the embodiment, a monitoring target 10B includes a network level 65 and an operation base level 66 besides the constituents of the monitoring target 10A.

The network level 65 includes a plurality of network facilities in a data center. For example, the network level 65 includes network (NW) appliances 95 (95A and 95B) such as a router and a switch. A monitoring apparatus 100D detects operating information on the respective constituents using, for example, a protocol such as a simple network management protocol (SNMP) and transmits the same to the operating status display system 20 at a prescribed interval.

The operation base level 66 includes a plurality of servers that operates at an operation base. For example, the operation base level 66 includes a virtual terminal server 96A, a biometrics authentication server 97B, and an operation tool monitoring server 98C. The virtual terminal server 95A is a server for managing a system that operates at the data center in, for example, the operation base. In this case, the monitoring terminals 30 can confirm the operating statuses of the constituents that configure the monitoring target 10B by accessing the virtual terminal server 95A. The biometrics authentication server 97B is a server that provides a biometrics authentication system for managing, for example, entry into and exit from the operation base. Further, the operation tool monitoring server 98C is a server that monitors various programs for operating the monitoring target 10B. Further, the operation base level 66 includes a monitoring apparatus 100E for monitoring the operating statuses of the constituents of the operation base level 66. The monitoring apparatus 100E transmits operating information indicating the operating statuses of the respective constituents to the operating status display system 20 at, for example, a prescribed interval based on log information or the like output from the respective constituents.

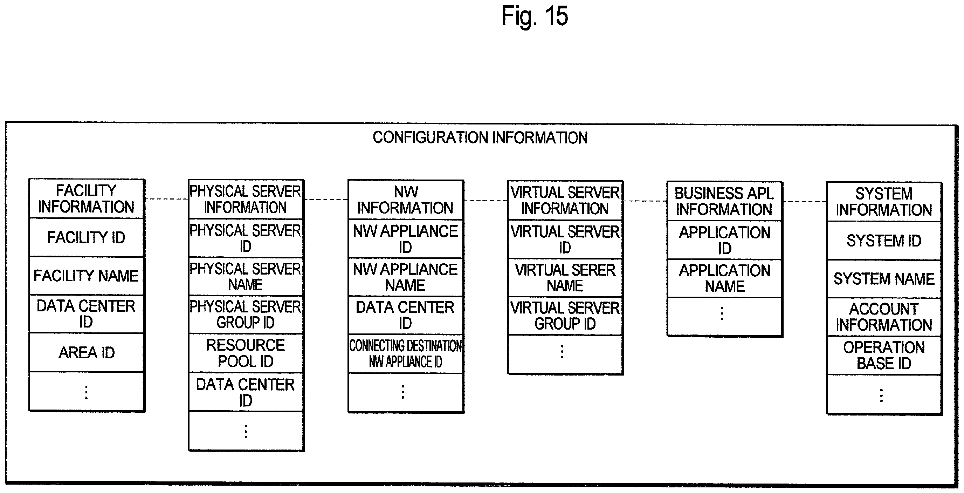

Fig. 15 is a diagram showing an example of configuration information in the second embodiment. The configuration information in the second embodiment further includes network (NW) information besides the elements of the configuration information in the first embodiment.

The network information is information on the network appliances in the network level 65. The network information includes, for example, network appliance IDs, network appliance names, provided data center IDs, connecting destination network appliance IDs, or the like.

In the second embodiment, physical server information and facility information further include data center IDs, and system information further includes operation base IDs.

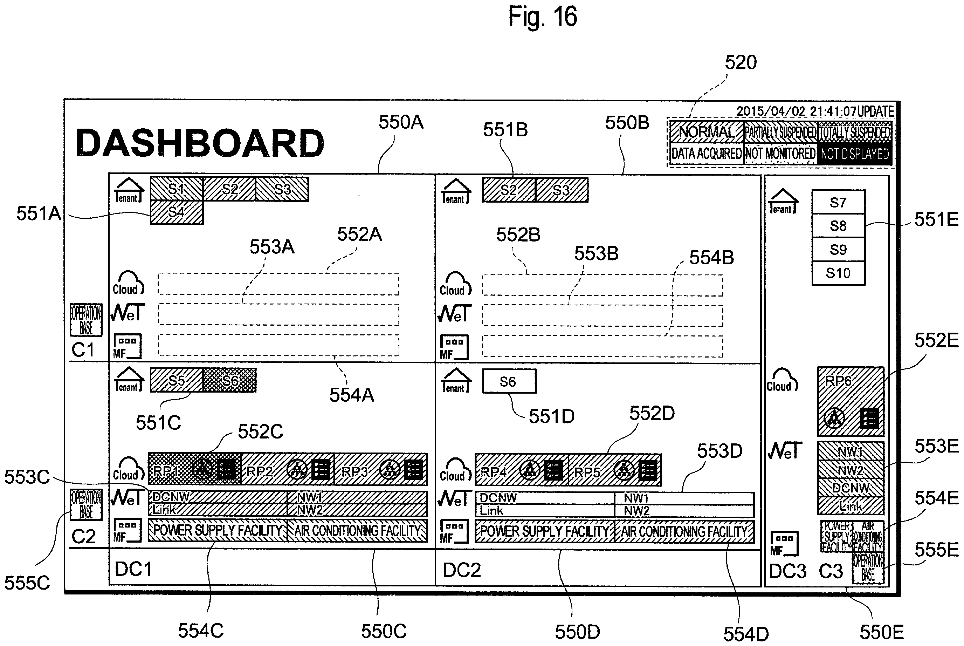

Fig. 16 is a diagram showing an example of a top screen provided by an operating status display unit 230 according to the second embodiment. A screen shown in Fig. 16 includes, for example, a reference information display region 520 and regions 550 (550A, 550B, 550C, 550D, and 550E).

In the second embodiment, the classification of operating statuses shown in the reference information display region 520 includes "data not obtained," "not monitored," and "not displayed" statuses besides "normal," "partially defective," and "totally defective" statuses. For example, when the operating statuses of the monitoring target 10B are the "data not obtained" statuses, the icons are displayed in white. Further, when the operating statuses of the monitoring target 10B are the "not monitored" statuses, the icons are displayed in gray. Further, when the operating statuses of the monitoring target 10B are the "not displayed" statuses, the icons are displayed in black. Note that when the icons are displayed as the "not monitored" and "not displayed" statuses on the screen displayed by the operating status display unit 230, the monitoring terminals 30 accessing the operating status display system 20 do not have management authority over the monitoring target 10B, for example. Further, it is possible for a manager to arbitrarily set the monitoring target 10B in which the icons are displayed as the "not monitored" and "not displayed" statuses.

The operating status display unit 230 displays the operating statuses of the monitoring target 10B in the regions 550 with a plurality of operation bases C1 to C3 that manages systems and a plurality of data centers DC1 to DC3 that provides the foundations of the systems associated with each other.

For example, a region 550A displays the operating statuses of the monitoring target 10B operating at a data center DC1 and managed at an operation base C1. Further, a region 550B displays the operating statuses of the monitoring target 10B operating at a data center DC2 and managed at the operation base C1. Similarly, a region 550C displays the operating statuses of the monitoring target 10B operating at the data center DC1 and managed at an operation base C2, and a region 550D displays the operating statuses of the monitoring target 10B operating at the data center DC2 and managed at the operation base C2. Further, an operating status display region 550E displays the operating statuses of the monitoring target 10B operating at a data center DC3 and managed at an operation base C3.

The respective regions 550 include tenant operating status display regions 551 (551A, 551B, 551C, 551D, and 551E), cloud computing system operating status display regions 552 (552A, 552B, 552C, 552D, and 552E), network operating status display regions 553 (553A, 553B, 553C, 553D, and 553E), facility operating status display regions 554 (554A, 554B, 554C, 554D, and 554E), and operation base operating status display regions 555 (555A, 555C, and 555E).

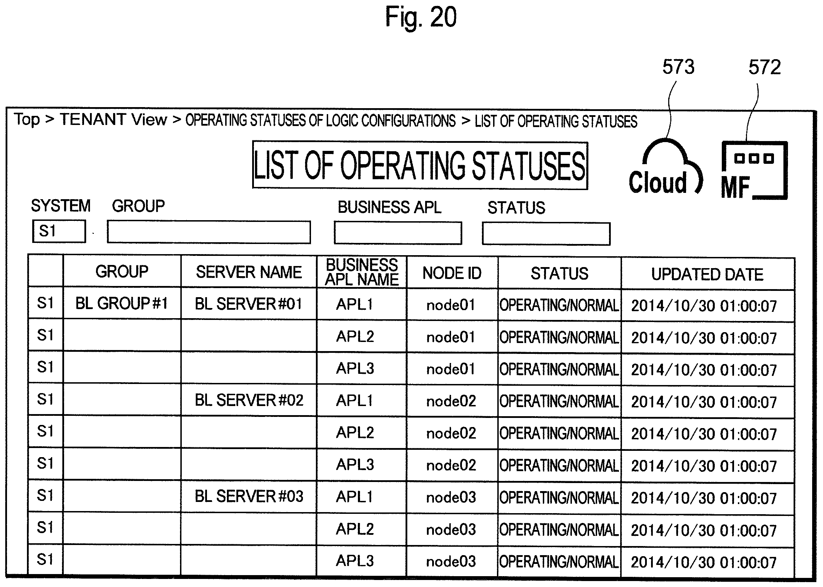

The tenant operating status display regions 551 display icons indicating the operating statuses of systems operating at prescribed data centers among systems managed at prescribed operation bases. In the example of Fig. 16, a tenant operating status display region 551C in the region 550C displays, for example, icons indicating the operating statuses of systems S5 and S6 managed at the operation base C2 and operating at the data center DC1. Note that when the icons displayed in the tenant operating status display regions 551 are selected, the above screen of Fig. 6 or the screen of Fig. 20 that will be described later is preferably displayed.

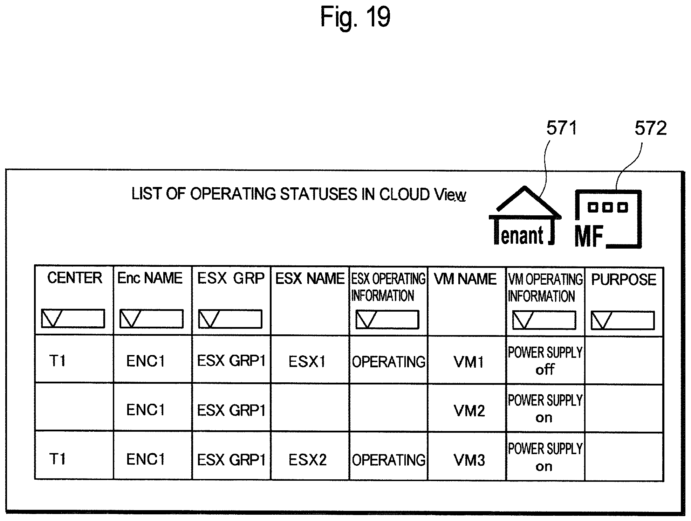

The cloud computing system operating status display regions 552 display icons indicating the operating statuses of cloud computing systems operating in physical servers installed at prescribe data center among cloud computing systems that provide the resource pools of systems managed at prescribed operation bases. In the example of Fig. 16, a cloud computing system operating status display region 552C in the region 550C displays, for example, icons indicating the operating statuses of cloud computing systems RP1, RP2, and RP3 that provide the resource pools of the systems S5 and S6 managed at the operation base C2 and operate at the data center DC1. Note that when the icons displayed in the cloud computing system operating status display regions 552 are selected, the above screen of Fig. 9 or the screen of Fig. 19 that will be described later is preferably displayed.

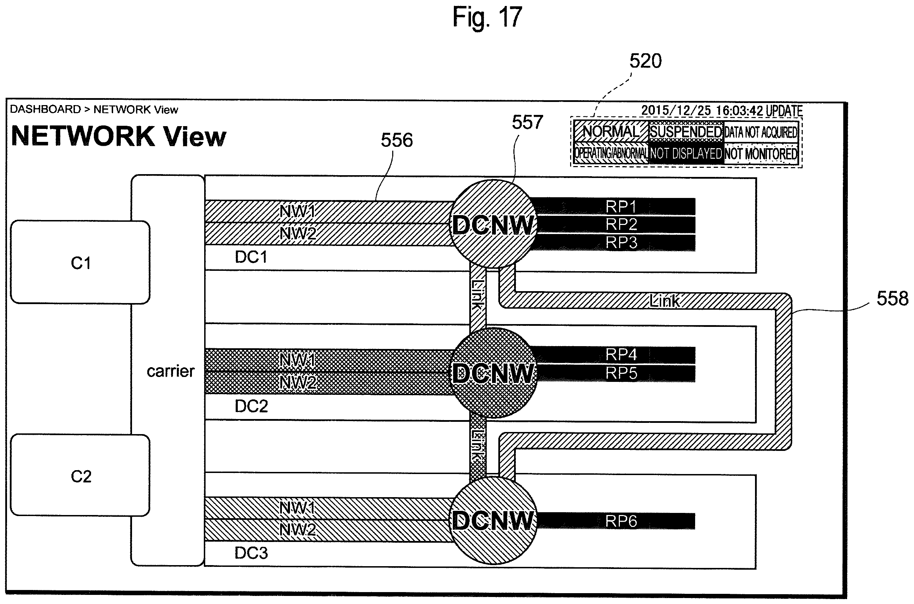

The network operating status display regions 553 display icons indicating the operating statuses of networks connected to prescribed data centers. In the example of Fig. 16, a network operating status display region 553C in the region 550C displays, for example, icons (NW1 and NW2) indicating the connected statuses between the data center DC1 and external networks NW1 and NW2, an icon (DCNW) indicating the operating status of a network appliance installed at the data center DC1, and an icon (Link) indicating connected statuses with the other data centers. When the icons displayed in the network operating status display regions 553 are selected, the screen of Fig. 17 that will be described later is preferably displayed.

The display of the icons (NW1 and NW2) indicating the connected statuses between the data center DC1 and the external networks NW1 and NW2 is preferably controlled based on, for example, the operating statuses of network appliances connected to the networks NW1 and NW2 installed at the data center DC1. Note that the control of the display of the icon (Link) indicating the connected statuses with the other data centers will be described in detail together with the description of Fig. 17 below.

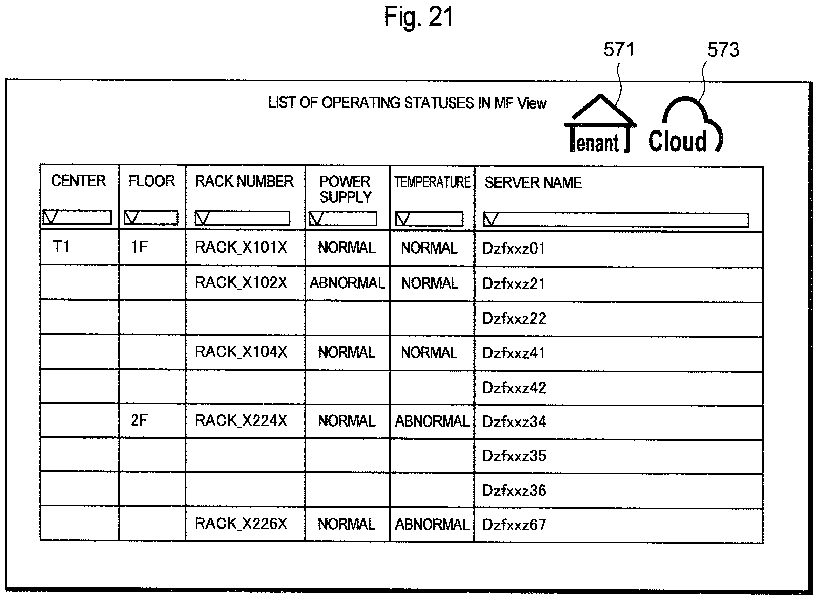

The facility operating status display regions 554 display icons indicating the operating statuses of facilities at prescribed data centers. In the example of Fig. 16, a facility operating status display region 554C displays icons indicating the operating statuses of a power supply facility and an air conditioning facility installed at the data center DC1. Note that when the icons displayed in the facility operating status display region 554 are selected, the above screen of Figs. 11 or 12 or the screen of Fig. 21 that will be described later is preferably displayed.

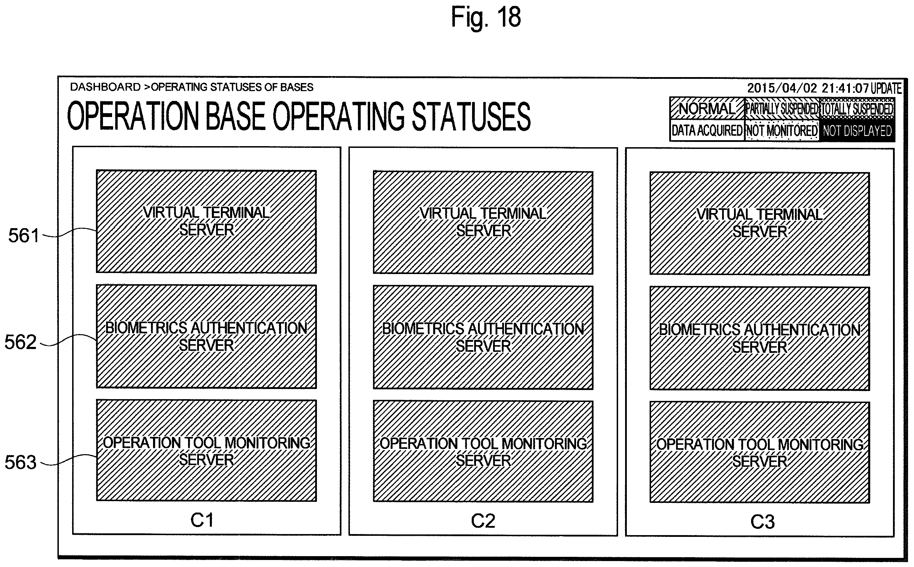

The operation base operating status display regions 555 display icons indicating the operating statuses of prescribed operation bases. In the example of Fig. 16, an operation base operating status display region 555C displays, for example, an icon indicating the operating status of the operation base C2. Note that when the icons displayed in the operation base operating status display regions 555 are selected, the screen of Fig. 18 that will be described later is preferably displayed.

Fig. 17 is a diagram showing an example of the screen of network operating statuses. The screen of Fig. 17 includes the above reference information display region 520, external network connected status display regions 556, network appliance operating status display regions 557, and connected status display regions 558 between centers.

The external network connected status display regions 556 display icons indicating the connected statuses between respective data centers and external networks. In the example of Fig. 17, icons indicating the connected statuses between the data centers DC1, DC2, and DC3 and the external networks NW1 and NW2 are displayed.

The network appliance operating status display regions 557 display icons indicating the operating statuses of network appliances such as routers and switches installed at the respective data centers.

The connected status display regions 558 between the centers display icons indicating the connected statuses between the respective centers. In the example of Fig. 17, an icon indicating a "suspended" status, for example, is displayed as a connected status in a path in which the data center DC2 and the data center DC3 are directly connected to each other. On the other hand, an icon indicating an "operating" status is displayed as a connected status in a detour in which the data center DC2 is connected to the data center DC3 via the data center DC1. In this case, the data center DC2 and the data center DC3 can be connected to each other via the detour. Accordingly, in such a case, an icon indicating a "normal" status is displayed as the connected status (Link) between the data center DC3 and the other data centers on the top screen shown in Fig. 16.

Fig. 18 is a diagram showing an example of the screen of operation base operating statuses. The screen of Fig. 18 includes the above reference information display region, virtual terminal server operating status display regions 561, biometrics authentication server operating status display regions 562, and operation tool monitoring server operating status display regions 563. In the example of Fig. 18, the operation base C2 displays an icon indicating a "partially suspended" status, for example, in the operation tool monitoring server operating status display region 563. In this case, the icon displayed in the operation base operating status display region 555C on the screen of Fig. 16 indicates the "partially suspended" status. As described above, the operating status display unit 230 preferably determines icons displayed in the operation base operating status display regions 555 on the screen of Fig. 16 based on an icon having the highest urgency among monitoring targets at respective operation bases.

Fig. 19 is a diagram showing an example of the screen of the list of cloud computing system operating statuses in the second embodiment. The screen shown in Fig. 19 further includes a tenant switch button 571 and a facility switch button 572 besides the configuration of the screen of Fig. 10. When the tenant switch button 571 is selected, the operating status display unit 230 displays the screen of the list of tenant operating statuses (Fig. 20) that will be described later. Further, when the facility switch button 572 is selected, the operating status display unit 230 displays the screen of the list of facility operating statuses (Fig. 21) that will be described later.

Fig. 20 is a diagram showing an example of the screen of the list of system operating statuses in the second embodiment. The screen of Fig. 20 further includes a cloud switch button 573 and the facility switch button 572 besides the configuration of the screen of Fig. 7. When the cloud switch button 573 is selected, the operating status display unit 230 displays the above screen of the list of the cloud computing system operating statuses of Fig. 19.

Fig. 21 is a diagram showing an example of the screen of the list of the facility operating statuses in the second embodiment. The screen of Fig. 21 further includes the tenant switch button 571 and the cloud switch button 573 besides the configuration of the screen of Fig. 8.

As described above, the operating status display unit 230 according to the second embodiment can switch the screen between the screen of the list of cloud computing system operating statuses (Fig. 19), the screen of the list of system operating statuses (Fig. 20), and the screen of the list of facility operating statuses (Fig. 21). Thus, a system manager can easily understand the corresponding relationships between facilities, cloud computing systems operating on the cloud computing systems, and systems operating on the cloud computing systems.

As described above, the operating status display system 20 according to the second embodiment can provide a screen on which the operating statuses of a system having a complicated configuration are easily understandable, the system being configured such that data centers and operation bases are on a multiple-to-multiple basis. Thus, even if large-scale trouble occurs, a system manager can accurately understand the statuses of the trouble and take appropriate countermeasures.

Note that the embodiments are given for the purpose of facilitating the understanding of the present invention and do not intend to limit the interpretation of the present invention. The present invention may be altered/modified without departing from its spirit and includes its equivalents.

### Reference Signs List

- 10: Monitoring target
- 20: Operating status display system
- 30: Monitoring terminal
- 40: Facility level
- 50: Cloud level
- 60: System level
- 70: Power supply
- 75: Rack
- 80: Resource pool
- 90: System
- 100: Monitoring apparatus
- 200: Configuration information storage unit
- 210: Operating information reception unit
- 220: Operating information storage unit
- 230: Operating status display unit

## Claims

1. An operating status display system comprising:
a configuration information storage unit that stores configuration information indicating a relationship between constituents in a monitoring target, the constituents being a plurality of systems provided on a plurality of cloud computing system s, a plurality of business applications operating on the plurality of cloud computing systems to realize the systems, a plurality of virtual servers, at least one of the plurality of virtual servers being used for the plurality of business applications , a plurality of physical servers configuring the plurality of virtual servers, and a plurality of facilities used for the plurality of physical servers;
an operating information storage unit that stores operating information indicating respective operating statuses of the business applications, the virtual servers, the physical servers, and the facilities; and
an operating status display unit that performs switching among system operating statuses indicating operating statuses of at least some of the plurality of systems, cloud computing system operating statuses indicating operating statuses of at least some of the plurality of cloud computing systems, and facility operating statuses indicating operating statuses of at least some of the plurality of facilities according to a user operation and displays the switched operating statuses, based on the configuration information and the operating information.

2. The operating status display system according to claim 1, wherein
the monitoring target operates at a plurality of data centers and is monitored at a plurality of operation bases,
the configuration information further includes information indicating the data centers at which the monitoring target operates and the operation bases at which the monitoring target is monitored, and
the operating status display unit displays the system operating statuses, the cloud computing system operating statuses, and the facility operating statuses at the plurality of data centers and the plurality of operation bases as an entire operating status in association with the data centers and the operation bases based on the configuration information and the operating information.

3. The operating status display system according to claim 2, wherein
the configuration information further includes information indicating a plurality of networks between the plurality of data centers, the networks being configured by a plurality of network appliances installed at the plurality of data centers,
the operating information further includes information indicating operating statuses of the plurality of network appliances and the plurality of networks, and
the operating status display unit:
displays network appliance operating statuses indicating operating statuses of at least some of the plurality of network appliances in the entire operating status in association with the data centers and the operation bases; and
when the user selects the network appliance operating statuses in the entire operating status, switches from a display of the entire operating status to a display of network operating statuses indicating operating statuses of at least some of the plurality of networks.

4. The operating status display system according to claim 3, wherein
the configuration information further includes information on a terminal operating at the operation bases,
the operating information further includes operating information on the terminal operating at the operation bases, and
the operating status display unit:
displays operation base operating statuses indicating operating statuses of the operation bases in the entire operating status based on the operating information on the terminal; and
when the user selects the operation base operating statuses in the entire operating status, switches from a display of the operation base operating statuses to a display of operating statuses of the terminal operating at the selected operation bases based on the operating information on the terminal operating at the operation bases.

5. The operating status display system according to any one of claim 1, wherein
the system operating statuses include business application operating statuses indicating operating statuses of the business applications of the at least some of the plurality of systems.

6. The operating status display system according to claim 5, wherein
the business applications are capable of being performed by at least two of the plurality of virtual servers, and
the operating status display unit changes a display mode of the operating statuses of the business applications based on operating statuses of the at least two virtual servers.

7. The operating status display system according to claim 5, wherein
the operating status display unit performs switching between the business application operating statuses and virtual server operating statuses indicating operating statuses of at least some of the plurality of virtual servers used for the business applications according to the user operation and displays the switched operating statuses.

8. The operating status display system according to claim 6, wherein
the at least some of the plurality of virtual servers configure a plurality of groups, and
the operating status display unit displays operating statuses of respective servers in the groups and operating statuses of the groups based on the operating statuses of the virtual servers in the groups.
